# EUROPEAN PATENT SPECIFICATION

(11) **EP 3 576 195 B1**
(45) Date of publication and mention of the grant of the patent: **25.05.2022**
(21) Application number: 19175282.3
(22) Date of filing: 20.05.2019
(51) Int. Cl.: H01M 4/38, H01M 4/58, H01M 10/052, H01M 10/0562

(54) **CATHODE MIXTURE, ALL SOLID STATE BATTERY, AND METHOD FOR PRODUCING CATHODE MIXTURE**
KATHODENMISCHUNG, FESTKÖRPERBATTERIE UND VERFAHREN ZUR HERSTELLUNG DER KATHODENMISCHUNG
MÉLANGE DE CATHODE, BATTERIE ENTIÈREMENT À L'ÉTAT SOLIDE ET PROCÉDÉ DE PRODUCTION D'UN MÉLANGE DE CATHODE

(30) Priority: 01.06.2018 JP 2018106351
(43) Date of publication of application: 04.12.2019
(73) Proprietor: TOYOTA JIDOSHA KABUSHIKI KAISHA, Toyota-shi, Aichi-ken, 471-8571 (JP)
(72) Inventor: NOSE, Masafumi, Toyota-shi, Aichi-ken, 471-8571 (JP)
(74) Representative: Winter, Brandl - Partnerschaft mbB

(56) References cited:
- EP-A1- 3 291 338
- WO-A1-2012/026238
- US-A1- 2017 117 547

## Description

### Technical Field

The present disclosure relates to a cathode mixture.

### Background Art

In accordance with the rapid spread of information-related apparatuses and communication devices such as a personal computer, a video camera, and a portable telephone in recent years, the development of a battery used for the power source thereof is regarded as important. Also in the automobile industry, the development of a battery with high out-put and high capacity for electric vehicles or hybrid vehicles is in progress.

The development of a sulfur battery using sulfur as a cathode active material is in progress. The sulfur has a feature that the theoretical capacity thereof is extremely high as 1675 mAh/g. Non-Patent Literature 1 discloses that a cathode mixture is produced by conducting mechanical milling to a mixture of sulfur (S), P₂S₅, and Ketjen black.

Also, Patent Literature 1 discloses a cathode mixture comprising sulfur and/or its corona product, an ion conductive material, and an activated carbon covered with a conductive material. Also, Patent Literature 2 discloses an all solid lithium sulfur battery comprising a cathode containing sulfur and a conductive material, an anode containing a lithium metal, and a solid electrolyte layer interposed between the cathode and the anode. Incidentally, Patent Literature 3 discloses an all solid state secondary battery using Li₂S-LiI-LiBr or Li₂S-LiI as a cathode active material. Patent Literature 4 discloses a cathode material comprising a sulfur-carbon composite and a metal sulfide such as tin sulfide or germanium sulfide. A lithium ion conductive material can be added to the cathode material particles.

### Citation List

### Patent Literatures

Patent Literature 1: Japanese Patent Application Laid-Open (JP-A) No. 2015-176849
Patent Literature 2: JP-A No. 2017-168434
Patent Literature 3: International Publication No. WO2016/063877
Patent Literature 4: US 2017/0117547

### Non-Patent Literature

Non-Patent Literature 1: N. Tanibata et al., "A novel discharge-charge mechanism of a S-P2S5 composite electrode without electrolytes in all-solid-state Li/S batteries", J. Mater. Chem. A, 2017 5 11224-11228

### Summary of Disclosure

### Technical Problem

Higher performance of a battery has been required. The present disclosure has been made in view of the above circumstances, and a main object thereof is to provide a cathode mixture with high capacity.

### Solution to Problem

The present disclosure provides a cathode mixture comprising: a cathode active material including a S element; a sulfur containing compound including an M element, which is Ge, Sn, Si, B or Al, and a S element; a conductive auxiliary material; wherein a proportion of a Li element to all the elements included in the cathode mixture is 4 mol% or less.

According to the present disclosure, the sulfur containing compound including an M element is included but substantially no Li element is included so as to allow a cathode mixture to have high capacity.

In the disclosure, a proportion of the Li element is 0 mol% or more and 4 mol% or less.

In the disclosure, the cathode mixture may include a carbon material as the conductive auxiliary material.

The present disclosure also provides an all solid state battery comprising a cathode layer, a solid electrolyte layer, and an anode layer in this order; wherein the cathode layer comprises a cathode active material including a S element, a sulfur containing compound including an M element, which is Ge, Sn, Si, B or Al, and a S element, a conductive auxiliary material, wherein a proportion of a Li element to all the elements included in the cathode layer is 4 mol% or less.

According to the present disclosure, the cathode layer comprises the sulfur containing compound including an M element but substantially no Li element, so as to allow the all solid state battery to have high capacity.

The present disclosure also provides a method for producing a cathode mixture, the method comprising steps of: a preparing step of preparing a raw material mixture containing a cathode active material including a S
element , a sulfide including an M element, which is Ge, Sn, Si, B or Al, and a S element, a conductive auxiliary material, with a proportion of a Li element to all the elements included in the cathode mixture of 4 mol% or less; and a mechanical milling step of conducting mechanical milling to the raw material mixture.

According to the present disclosure, usage of the raw material mixture that contains the sulfide including an M element, but does not substantially contains a Li element allows a cathode mixture with high capacity to be obtained.

### Advantageous Effects of Disclosure

The cathode mixture in the present disclosure exhibits an effect of high capacity.

### Brief Description of Drawings

FIG. 1 is a schematic cross-sectional view illustrating an example of the all solid state battery in the present disclosure.
FIG. 2 is a flow chart explaining an example of the method for producing the cathode mixture in the present disclosure.
FIGS. 3A to 3C are the results of an XRD measurement for the raw material (GeS₂ and S) in Example 1 and the cathode mixture obtained in Example 1.
FIGS. 4A to 4C are the results of an XRD measurement for the raw material (SnS₂ and S) in Example 2 and the cathode mixture obtained in Example 2.
FIGS. 5A to 5C are the results of an XRD measurement for the raw material (SiS₂ and S) in Example 3 and the cathode mixture obtained in Example 3.
FIGS. 6A to 6C are the results of an XRD measurement for the raw material (P₂S₅ and S) in Comparative Example 1 and the cathode mixture obtained in Comparative Example 1.
FIG. 7 is the result of a charge and discharge test for the all solid state batteries obtained in Examples 1 to 3 and Comparative Example 1.
FIG. 8 is the result of a charge and discharge test for the all solid state batteries obtained in Examples 1 to 3 and Comparative Example 1.

### Description of Embodiments

The cathode mixture, the all solid state battery, and the method for producing the cathode mixture in the present disclosure will be hereinafter described in detail.

### A. Cathode mixture

The cathode mixture in the present disclosure comprises a cathode active material including a S element; a sulfur containing compound including an M element, which is Ge, Sn, Si, B or Al, and a S element; and a conductive auxiliary material. Further, the cathode mixture in the present disclosure comprises a Li element with a proportion to all the elements included in the cathode mixture of 4 mol% or less.

According to the present disclosure, the sulfur containing compound including an M element is included but substantially no Li element is included so as to allow the cathode mixture to have high capacity.

As described above, Non-Patent Literature 1 discloses that a cathode mixture is produced by conducting mechanical milling to a mixture of sulfur (S), P₂S₅, and Ketjen black. A battery using such a cathode mixture tends to have low capacity since the water resistance of P₂S₅ (especially P element) is low. To solve the problem, in the cathode mixture in the present disclosure, an element other than the P element is used as the M element so as to allow the cathode mixture to have high capacity.

Also, the cathode mixture in the present disclosure comprises substantially no Li element so as to inhibit the capacity from being degraded. Here, a cathode mixture containing an ion conductor (solid electrolyte) including a Li element has been known. For example, when an ion conductor using Li₂S is used as a raw material, a battery using such a cathode mixture in a cathode layer tends to have low capacity since the water resistance of Li₂S is low. To solve the problem, the cathode mixture in the present disclosure comprises substantially no Li element (that is, Li₂S) so as to inhibit the capacity from being degraded.

"Comprising substantially no Li element" signifies that the proportion of the Li element to all the elements included in the cathode mixture is 4 mol% or less, and may be 0 mol%. Also, the cathode mixture in the present disclosure may contain substantially no Na element. "Containing substantially no Na element" signifies that the proportion of the Na element to all the elements included in the cathode mixture is 4 mol% or less, and may be 0 mol%.

### 1. Cathode active material

The cathode active material includes a S element. Above all, the cathode active material is preferably elemental sulfur. Examples of the elemental sulfur may include S₈ sulfur. The S₈ sulfur has three crystal forms of αsulfur (rhombic sulfur), βsulfur (monoclinic sulfur), and γsulfur (monoclinic sulfur), but any of them may be applicable.

When the cathode mixture contains the elemental sulfur as a cathode active material, the cathode mixture may and may not have the peak of the elemental sulfur in an X-ray diffraction measurement. The typical peaks of the elemental sulfur appear at 2Θ = 23.05° ± 0.50°, 25.84° ± 0.50°, and 27.70° ± 0.50° in an XRD measurement using a CuKα ray. These peak positions may be respectively ± 0.30°, and may be ± 0.10°.

A part or whole of the elemental sulfur may be dissolved in the later described sulfur containing compound. In other words, the cathode mixture may contain a solid solution of the elemental sulfur and the sulfur containing compound. Also, a S element in the elemental sulfur and a S element in the sulfur containing compound may have a chemical bond (S-S bond). Incidentally, the content of the cathode active material in the cathode mixture is the same as the content of the cathode active material in the later described raw material mixture; thus, the description herein is omitted.

### 2. Sulfur containing compound

The sulfur containing compound in the present disclosure includes an M element, which is Ge, Sn, Si, B or Al, and a S element. Also, the cathode mixture may contain just one kind of the sulfur containing compound, and may contain two kinds or more thereof.

Meanwhile, the sulfur containing compound in the present disclosure contains a Li element with a proportion to all the elements included in the cathode mixture of 4 mol% or less. Also, it is preferable that the sulfur containing compound becomes an ion conducting path during charge and discharge. Here, Li ions are conducted from the anode layer to the cathode layer via the solid electrolyte layer during discharge, and the Li ions reached at the cathode layer react with cathode active materials. When the sulfur containing compound is not present in the cathode layer, the ion conductivity of the corona product (such as Li₂S) is low; thus the discharge reaction does not easily proceed due to lack of the ion conducting path in the cathode layer. On the other hand, when the sulfur containing compound is present in the cathode layer, the ion conducting path in the cathode layer is secured by the sulfur containing compound and thus the discharge reaction easily proceeds even if the ion conductivity of the corona product (such as Li₂S) is low.

The sulfur containing compound preferably contains an ortho structural skeleton of an M element. Examples of the ortho structural skeleton may include a GeS₄ structural skeleton, a SnS₄ structural skeleton, a SiS₄ structural skeleton, a BS₃ structural skeleton, and an AlS₃ structural skeleton. The sulfur containing compound may contain just one kind of the ortho structural skeleton, and may contain two kinds or more thereof. Meanwhile, the sulfur containing compound may contain the sulfide of an M element (MₓS_{y}). Here, "x" and "y" are respectively an integer that gives the compound electrical neutrality with an S element according to the kind of M. Also, the sulfide (MₓS_{y}) is, for example, a residue of the starting material. Examples of the sulfide (MₓS_{y}) may include GeS₂, SnS₂, SiS₂, B₂S₃, and Al₂S₃. The sulfur containing compound may contain just one kind of the sulfide (MₓS_{y}), and may contain two kinds or more thereof.

The sulfur containing compound preferably has at least the ortho structural skeleton, and may have just the ortho structural skeleton. The presence of the ortho structural skeleton may be confirmed by, for example, a Raman spectroscopy measurement. Meanwhile, the sulfur containing compound may and may not include the sulfide (MₓS_{y}). For example, when a cathode mixture is produced by conducting mechanical milling to a raw material mixture containing the elemental sulfur (cathode active material) and the sulfide (MₓS_{y}), if the proportion of the elemental sulfur is sufficient, the ortho structural skeleton may be easily formed, and thus the cathode mixture not containing the sulfide (MₓS_{y}) may be easily obtained. On the other hand, if the proportion of the elemental sulfur is comparatively little, a part of the sulfide (MₓS_{y}) easily remains, and thus the cathode mixture containing the sulfide (MₓS_{y}) may be easily obtained.

The cathode mixture may and may not have the peak of the sulfide (MₓS_{y}) in an XRD measurement. The typical peaks of GeS₂ appear at 2Θ = 15.43° ± 0.50°, 26.50° ± 0.50°, and 28.60° ± 0.50° in an XRD measurement using a CuKα ray. Also, the typical peaks of SnS₂ appear at 2Θ = 15.02° ± 0.50°, 32.11° ± 0.50°, and 46.14° ± 0.50° in an XRD measurement using a CuKα ray. Also, the typical peaks of SiS₂ appear at 2Θ = 18.36° ± 0.50°, 29.36° ± 0.50°, and 47.31° ± 0.50° in an XRD measurement using a CuKα ray. These peak positions may be respectively ± 0.30°, and may be ± 0.10°.

Also, as described above, a S element in the sulfur containing compound and a S element in the elemental sulfur (cathode active material) may have a chemical bond (S-S bond). In particular, it is preferable that the S element in the ortho structural skeleton and the S element in the elemental sulfur (cathode active material) have a chemical bond (S-S bond). Incidentally, the content of the sulfur containing compound in the cathode mixture is the same as the content of the sulfide in the later described raw material mixture; thus the description herein is omitted.

### 3. Conductive auxiliary material

The conductive auxiliary material has a function of improving the electron conductivity of the cathode mixture. Also, it is presumed that the conductive auxiliary material functions as a reductant that reduces the elemental sulfur on the occasion such as when mechanical milling is conducted to the raw material mixture. The conductive auxiliary material is preferably present in the state dispersed in the cathode mixture.

Examples of the conductive auxiliary material may include a carbon material and a metal material. Examples of the carbon material may include vapor growth carbon fiber (VGCF), acetylene black, activated carbon, furnace black, carbon nanotube, Ketjen black, and graphene. Incidentally, the content of the conductive auxiliary material in the cathode mixture is the same as the content of the conductive auxiliary material in the later described raw material mixture; thus, the description herein is omitted.

### 4. Cathode mixture

The cathode mixture in the present disclosure comprises: a cathode active material including a S element; a sulfur containing compound including an M element, which is Ge, Sn, Si, B or Al, and a S element; and a conductive auxiliary material. The cathode mixture may contain just the cathode active material, the sulfur containing compound, and the conductive auxiliary material, and may further contain an additional material.

In the cathode mixture, there are no particular limitations on the molar ratio (M/S) of the M element to the S element; for example, it is 0.03 or more, may be 0.06 or more, and may be 0.09 or more. Meanwhile, the molar ratio (M/S) is, for example, 0.5 or less, may be 0.3 or less, may be 0.25 or less, and may be 0.23 or less. Incidentally, the denominator of the molar ratio (M/S) signifies the amount of all the S elements included in the cathode mixture; since both the cathode active material and the sulfur containing compound in the present disclosure include a S element, the amount of the both S elements are summed.

Also, the cathode mixture in the present disclosure may include a P element, and may not include a P element. In the former case, the cathode mixture preferably comprises a sulfur containing compound including a P element and a S element as the sulfur containing compound. Further, the sulfur containing compound preferably includes the ortho structural skeleton of a P element. The ortho structural skeleton of the P element is specifically PS₄ structural skeleton. Also, the sulfur containing compound may include the sulfide of a P element (such as P₂S₅). Further, the cathode mixture may and may not have the peak of P₂S₅ in an XRD measurement. The typical peaks of P₂S₅ appear at 2Θ = 25.84° ± 0.50°, 30.35° ± 0.50°, and 31.32° ± 0.50° in an XRD measurement using a CuKα ray.

### B. All solid state battery

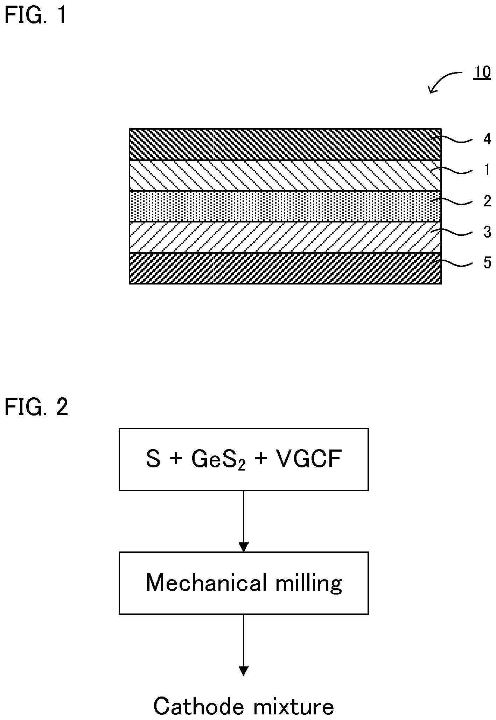

FIG. 1 is a schematic cross-sectional view illustrating an example of the all solid state battery in the present disclosure. All solid state battery 10 illustrated in FIG. 1 comprises cathode layer 1, solid electrolyte layer 2, and anode layer 3 in this order. All solid state battery 10 further comprises cathode current collector 4 for collecting currents of cathode layer 1, and anode current collector 5 for collecting currents of anode layer 3. Cathode layer 1 comprises: a cathode active material including a S element; a sulfur containing compound including an M element, which is Ge, Sn, Si, B or Al, and a S element; a conductive auxiliary material; the proportion of a Li element to all the elements included in the cathode mixture is 4 mol% or less.

According to the present disclosure, the cathode layer comprises the sulfur containing compound including an M element but substantially no Li element, so as to allow the all solid state battery to have high capacity.

### 1. Cathode layer

The cathode layer comprises: a cathode active material including a S element; a sulfur containing compound including an M element, which is Ge, Sn, Si, B or Al, and a S element; and a conductive auxiliary material. Meanwhile, the proportion of a Li element to all the elements included in the cathode mixture is 4 mol% or less. The cathode active material, the sulfur containing compound, the conductive auxiliary material, and the other items are in the same contents as those described in "A. Cathode mixture" above; thus, the descriptions herein are omitted.

The thickness of the cathode layer is, for example, 0.1 µm or more and 1000 µm or less. Also, the cathode layer may be obtained by, for example, pressing the above described cathode mixture.

### 2. Anode layer

The anode layer is a layer containing at least an anode active material. The anode active material preferably includes a Li element. Examples of such an anode active material may include a simple substance of lithium and a lithium alloy. Examples of the lithium alloy may include Li-In alloy. The anode active material preferably includes a Na element. Examples of such an anode active material may include a simple substance of sodium and a sodium alloy.

The anode layer may contain at least one of a solid electrolyte, a conductive auxiliary material, and a binder, as required. The conductive auxiliary material is in the same contents as those described for the cathode layer above. Examples of the binder may include a fluorine-based binder such as polyvinylidene fluoride (PVDF). Also, the thickness of the anode layer is, for example, 0.1 µm or more and 1000 µm or less.

### 3. Solid electrolyte layer

The solid electrolyte layer is a layer formed between the cathode layer and the anode layer. Also, the solid electrolyte layer is a layer containing at least a solid electrolyte, and may contain a binder as required.

Examples of the solid electrolyte may include a sulfide solid electrolyte, an oxide solid electrolyte, a nitride solid electrolyte, and a halide solid electrolyte. Above all, the sulfide solid electrolyte is preferable. The sulfide solid electrolyte preferably includes a Li element, an A element (A is at least one kind of P, Ge, Si, Sn, B, and Al), and a S element. The sulfide solid electrolyte may further include a halogen element. Examples of the halogen element may include a F element, a Cl element, a Br element, and an I element. Also, the sulfide solid electrolyte may further include an O element.

Examples of the sulfide solid electrolyte may include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (provided that m, n is a real number; Z is either one of Ge, Zn, and Ga), Li₂S-GeS₂, Li₂S-SiS₂Li₃PO₄, and Li₂S-SiS₂-LiₓMO_{y} (provided that x, y is a real number; M is either one of P, Si, Ge, B, Al, Ga, and In) .

The proportion of the solid electrolyte included in the solid electrolyte layer is, for example, 50 volume% or more, may be 70 volume% or more, and may be 90 volume% or more. Incidentally, the binder to be used in the solid electrolyte layer is in the same contents as those described for the anode layer above. Also, the thickness of the solid electrolyte layer is, for example, 0.1 µm or more and 1000 µm or less.

### 4. All solid state battery

The all solid state battery in the present disclosure comprises the above described cathode layer, anode layer, and solid electrolyte layer, and usually further comprises a cathode current collector for collecting currents of the cathode layer, and an anode current collector for collecting currents of the anode layer. Examples of the material for the cathode current collector may include SUS, aluminum, nickel, iron, titanium, and carbon. On the other hand, examples of the material for the anode current collector may include SUS, copper, nickel, and carbon.

The all solid state battery in the present disclosure is preferably a sulfur battery. The sulfur battery signifies a battery using an elemental sulfur as a cathode active material. The all solid state battery in the present disclosure may be a lithium sulfur battery (LiS battery), and may be a sodium sulfur battery (NaS battery). Also, the all solid state battery may be a primary battery and may be a secondary battery, but the latter is preferable among them since it may be repeatedly charged and discharged, and is useful as, for example, a car-mounted battery. Incidentally, the secondary battery includes a usage of a secondary battery as a primary battery (the use for the purpose of just one time discharge after charge).

### C. Method for producing cathode mixture

FIG. 2 is a flow chart explaining an example of the method for producing the cathode mixture in the present disclosure. In FIG. 2, first, a mixture containing an elemental sulfur (S), a sulfide (GeS₂), and a conductive auxiliary material (VGCF) is prepared as the raw material mixture of the cathode mixture (preparing step). Next, mechanical milling is conducted to the raw material mixture (mechanical milling step). Thereby, the cathode mixture is obtained.

According to the present disclosure, usage of the raw material mixture that contains the sulfide including an M element but contains substantially no Li element allows the cathode mixture with high capacity to be obtained. Also, the mechanical milling forms an excellent three-phase interface where the cathode active material, the sulfur containing compound that can be an ion conducting path, and the conductive auxiliary material that can be an electron conducting path, coexist. Thereby, the charge and discharge capacities may be improved.

### 1. Preparing step

The preparing step is a step of preparing a raw material mixture containing a cathode active material including a S element, a sulfide including an M element, which is Ge, Sn, Si, B or Al, and a S element, a conductive auxiliary material, the proportion of a Li element to all the elements included in the cathode mixture is 4 mol% or less. The raw material mixture may be fabricated by one's own, and may be purchased from others.

The raw material mixture may contain just the cathode active material, the sulfide, and the conductive auxiliary material, and may further contain an additional material. Also, the raw material mixture substantially contains no Li element. In the same manner, the raw material mixture substantially contains no Na element.

The cathode active material is preferably an elemental sulfur. The purity of the elemental sulfur is preferably high. Meanwhile, examples of the sulfide (MₓS_{y}) may include GeS₂, SnS₂, SiS₂, B₂S₃, and Al₂S₃. The raw material mixture may contain just one kind of the sulfide (MₓS_{y}), and may contain two kinds or more thereof. Also, the raw material mixture may and may not contain the sulfide of P (such as P₂S₅). The conductive auxiliary material is in the same contents as those described in "A. cathode mixture" above.

The content of the cathode active material in the raw material mixture may be, for example, 10 weight% or more, may be 20 weight% or more, and may be 25 weight% or more. If the content of the cathode active material is too little, the cathode mixture with sufficient capacity may not be obtained in some cases. Meanwhile, the content of the cathode active material in the raw material mixture may be, for example, 80 weight% or less, may be 70 weight% or less, and may be 60 weight% or less. If the content of the cathode active material is too much, the ion conductivity and the electron conductivity in the cathode layer may be insufficient in some cases.

The content of the sulfide in the raw material mixture may be, for example, 10 weight% or more, and may be 20 weight% or more. If the content of the sulfide is too little, the ion conductivity in the cathode layer may be insufficient in some cases. Meanwhile, the content of the sulfide in the raw material mixture may be, for example, 80 weight% or less, and may be 70 weight% or less. If the content of the sulfide is too much, the content of the cathode active material becomes relatively little, and the cathode mixture with sufficient capacity may not be obtained in some cases.

The content of the conductive auxiliary material in the raw material mixture may be, for example, 5 weight% or more, and may be 10 weight% or more. If the content of the conductive auxiliary material is too little, the electron conductivity in the cathode layer may be insufficient in some cases. Meanwhile, the content of the conductive auxiliary material in the raw material mixture may be, for example, 50 weight% or less, and may be 40 weight% or less. If the content of the conductive auxiliary material is too much, the content of the cathode active material becomes relatively little, and the cathode mixture with sufficient capacity may not be obtained in some cases.

In the raw material mixture, the weight ratio of the sulfide to the cathode active material is, for example, 0.4 or more, may be 0.5 or more, and may be 0.6 or more. Meanwhile, the weight ratio is, for example. 4 or less, may be 3 or less, may be 2 or less, and may be 1.2 or less.

### 2. Mechanical milling step

The mechanical milling step is a step of conducting mechanical milling to the raw material mixture. The raw material mixture is amorphized by mechanical milling and thereby the cathode mixture is obtained.

There are no particular limitations on the mechanical milling if it is a method in which the cathode mixture is mixed while applying a mechanical energy thereto, and examples thereof may include ball milling, vibration milling, turbo milling, mechano-fusion, and disc milling. Above all, planetary ball milling is particularly preferable.

The mechanical milling may be dry mechanical milling and may be wet mechanical milling. The liquid to be used in the wet mechanical milling is preferably aprotonic to the extent hydrogen sulfide is not generated. Specific examples of the aprotonic liquid may include polar aprotonic liquid and nonpolar aprotonic liquid.

The conditions for the mechanical milling are appropriately arranged so as to obtain the desired cathode mixture. For example, when planetary ball milling is used, the raw material mixture and balls for crushing thereof are added to a container, and the treatment is conducted with specific number of weighing table rotation number and for specific time. The weighing table rotation number is, for example, 200 rpm or more, may be 300 rpm or more, and may be 510 rpm or more. Meanwhile, the weighing table rotation number is, for example, 800 rpm or less, and may be 600 rpm or less. Also, the treatment time of the planetary ball milling is, for example, 30 minutes or more, and may be 5 hours or more. Meanwhile, the treatment time of the planetary ball milling is, for example, 100 hours or less, and may be 60 hours or less. Examples of the material of the container and ball for crushing to be used in the planetary ball milling may include ZrO₂ and Al₂O₃. The diameter of the ball for crushing is, for example, 1 mm or more and 20 mm or less. The mechanical milling is preferably conducted in an inert gas atmosphere (such as Ar gas atmosphere).

### 3. Cathode mixture

The cathode mixture obtained by the above described production method is in the same contents as those described in "A. Cathode mixture" above; thus, the descriptions herein are omitted. Also, the present disclosure may also provide a cathode mixture which features to be obtained by the above described production method.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

Hereinafter, the present disclosure will be described more specifically with reference to Examples. Incidentally, each operation such as weighing, synthesizing and drying was carried out under Ar atmosphere, unless otherwise indicated.

### [Example 1]

### <Production of cathode mixture>

An elemental sulfur (cathode active material, from Kojundo Chemical Lab. Co., Ltd.), GeS₂ (sulfide), and VGCF (conductive auxiliary material) were prepared. These were weighed so as to be in the weight ratio shown in Table 1, and each raw material was kneaded in an agate mortar for 15 minutes to obtain a raw material mixture. The obtained raw material mixture was projected into a container (45 cc, made of ZrO₂) for planetary ball milling, further, ZrO₂ balls (φ = 4 mm, 96 g) were projected thereinto, and the container was completely sealed. This container was installed to a planetary ball milling machine (P7 from Fritsch Japan Co., Ltd), and a cycle of, mechanical milling for 1 hour (weighing table rotation number of 510 rpm), 15 minutes pause, mechanical milling for 1 hour in reverse turn (weighing table rotation number of 510 rpm), and 15 minutes pause, was repeated to carry out the mechanical milling for total of 48 hours. Thereby, a cathode mixture was obtained.

### <Fabrication of all solid state battery>

A solid electrolyte of 100 mg was placed in 1 cm² ceramic mold and pressed under 1 ton/cm² to obtain a solid electrolyte layer. The cathode mixture of 7.8 mg was placed on one side of the solid electrolyte layer and pressed under 6 ton/cm² to fabricate a cathode layer. On the other side, a lithium metal foil was placed as an anode layer and pressed under 1 ton/cm² to obtain a power generating element. An Al foil (cathode current collector) was placed on the cathode layer side, and a Cu foil (anode current collector) was placed on the abode layer side. Thereby, an all solid state battery was obtained.

### [Example 2]

A cathode mixture and an all solid state battery were obtained in the same manner as in Example 1 except that SnS₂ was used as the sulfide and each raw material was weighed so as to be in the weight ratio shown in Table 1.

### [Example 3]

A cathode mixture and an all solid state battery were obtained in the same manner as in Example 1 except that SiS₂ was used as the sulfide and each raw material was weighed so as to be in the weight ratio shown in Table 1.

### [Comparative Example 1]

A cathode mixture and an all solid state battery were obtained in the same manner as in Example 1 except that P₂S₅ was used as the sulfide and each raw material was weighed so as to be in the weight ratio shown in Table 1.

### [Evaluation]

### <X-ray diffraction measurement>

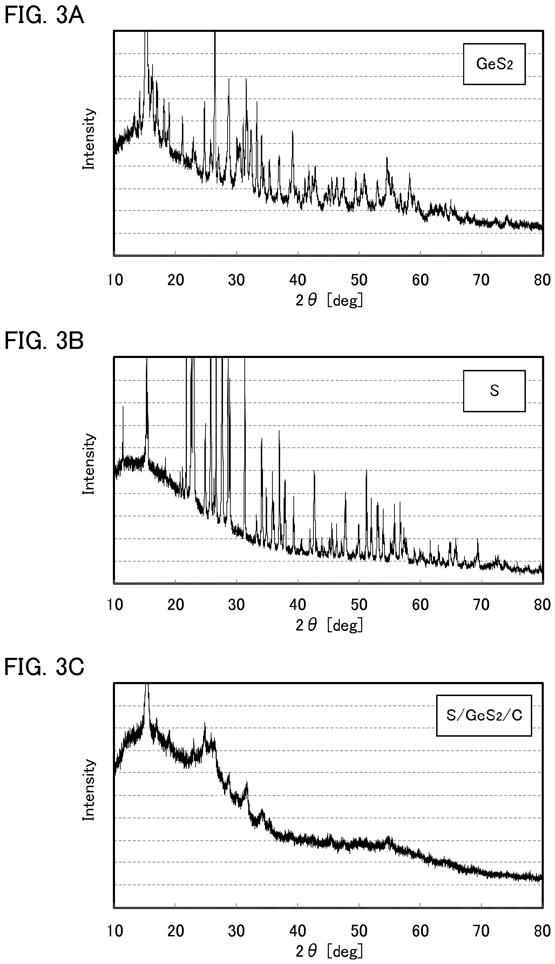

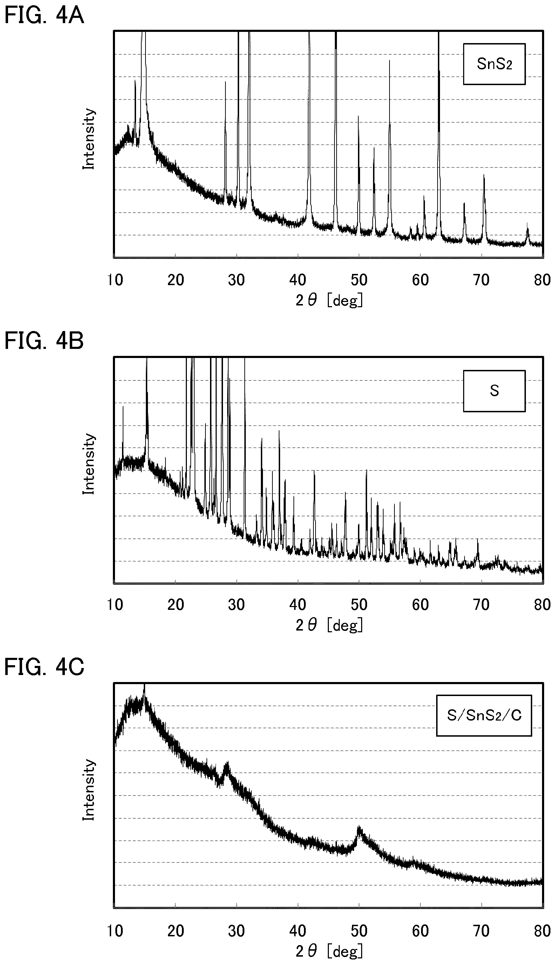

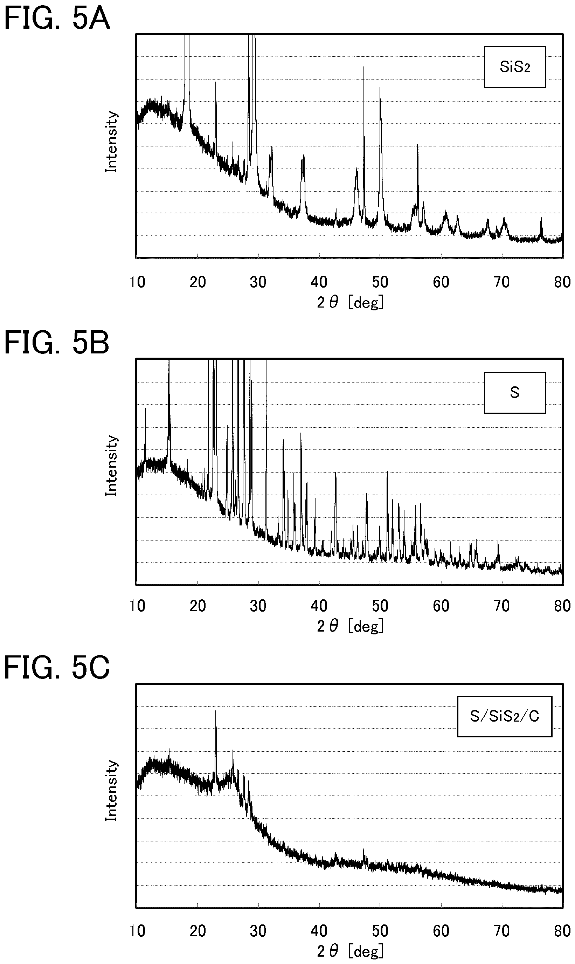

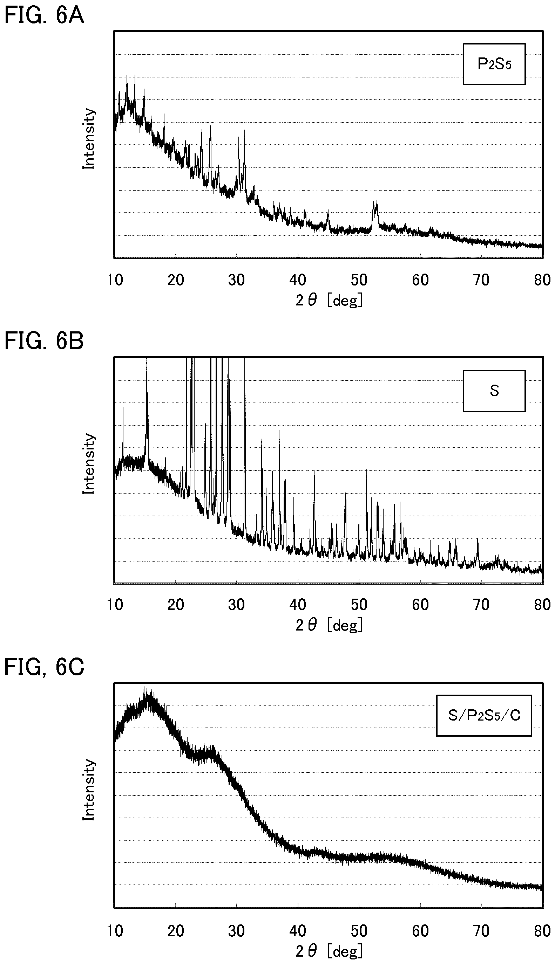

An X-ray diffraction (XRD) measurement using a CuKα ray was conducted for the raw materials (sulfide and elemental sulfur) in Examples 1 to 3 and Comparative Example 1, and the cathode mixtures obtained in Examples 1 to 3 and Comparative Example 1. The results are shown in FIG. 3A to FIG. 6C. As shown in FIG. 3A and FIG. 3B, it was confirmed that the sulfide (GeS₂) and the elemental sulfur as the raw material had peaks at the specific positions and had high crystallinity. On the other hand, as shown in FIG. 3C, it was confirmed that the cathode mixture after the mechanical milling was sufficiently amorphized. The same tendency was also confirmed in FIG. 4A to FIG. 6C.

### <Charge and discharge test>

A charge and discharge test was conducted for the all solid state batteries obtained in Examples 1 to 3 and Comparative Example 1. The charge and discharge test was conducted in the following procedures: first, the open circuit voltage (OCV) of the all solid state battery one minute or more passed from its fabrication was measured; next, charge and discharge were conducted under the environment at 60°C;
- 1^{st} cycle: Discharge to 1.5 V (vs Li/Li⁺) at C/10 (456 µA/cm²), and then, rest for 10 minutes;
- 2^{nd} to 6^{th} cycles: Charge to 3.1 V at C/10, rest for 10 minutes, discharge to 1.5 V at C/10, and rest for 10 minutes;
- 7^{th} cycle: Charge to 3.1 V at C/10, rest for 10 minutes, discharge to 1.5 V at C/3, rest for 10 minutes, discharge to 1.5 V at C/10, and rest for 10 minutes;
- 8^{th} cycle: Charge to 3.1 V at C/10, rest for 10 minutes, discharge to 1.5 V at 1C, rest for 10 minutes, discharge to 1.5 V at C/10, and rest for 10 minutes;
- 9^{th} cycle: Charge to 3.1 V at C/10, rest for 10 minutes, discharge to 1.5 V at 2C, rest for 10 minutes, discharge to 1.5 V at C/10, and rest for 10 minutes;
- 10^{th} to 40^{th} cycles: Charge to 3.1 V at C/10, rest for 10 minutes, discharge to 1.5 V at C/10, and rest for 10 minutes.

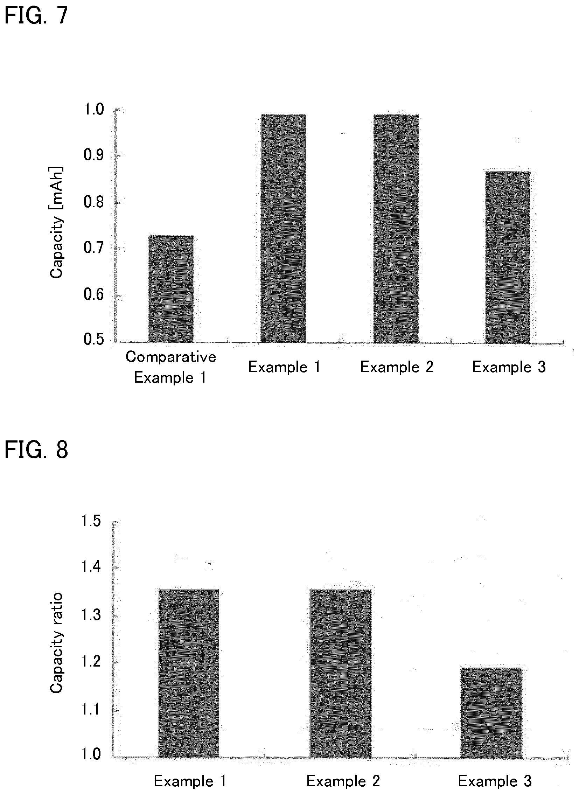

The results of the discharge capacity after 40 cycles are shown in Table 1 and FIG. 7. Also, the discharge capacity (capacity ratio) of Examples 1 to 3 when the discharge capacity of Comparative Example 1 is regarded as 1 is respectively shown in Table 1 and FIG. 8.

**[Table 1]**

| | Comparative Example 1 | Example 1 | Example 2 | Example 3 |
|---|---|---|---|---|
| S [g] | 1.050 | 1.050 | 0.867 | 1.188 |
| MₓS_{y} [g] | P₂S₅ 0.852 | GeS₂ 0.852 | SnS₂ 1.035 | SiS₂ 0.714 |
| C [g] | 0.570 | 0.570 | 0.570 | 0.570 |
| MₓS_{y}/S weight ratio | 0.81 | 0.81 | 1.19 | 0.60 |
| M/S molar ratio | 0.15 | 0.14 | 0.15 | 0.15 |
| Capacity [mAh] | 0.73 | 0.99 | 0.99 | 0.87 |
| Capacity ratio | 1.00 | 1.36 | 1.36 | 1.19 |

As shown in Table 1, FIG. 7, and FIG. 8, the capacity of Examples 1 to 3 after the charge and discharge test was higher than that of Comparative Example 1. The reason therefor is presumed to be because the water resistance of the sulfide M element (Ge element, Sn element and Si element) used in Examples 1 to 3 was higher than that of the sulfide P element used in Comparative Example 1. In other words, it is presumed that the capacity was easily degraded in Comparative Example 1 due to the charge and discharge test even in the environment with low dew point since the water resistance of the P element is low; however, the degrade of the capacity due to the charge and discharge test was inhibited in Examples 1 to 3 since the water resistance of the Ge element, the Sn element, and the Si element is respectively high. Also, the same effect is expected when a B element or an Al element is used as the M element since the water resistance of these elements is higher than that of the P element.

### Reference Signs List

- 1: cathode layer
- 2: solid electrolyte layer
- 3: anode layer
- 4: cathode current collector
- 5: anode current collector
- 10: all solid state battery

## Claims

1. A cathode mixture comprising:
a cathode active material including an elemental sulfur;
a sulfur containing compound including an M element, which is Ge, Sn, Si, B or Al, and a S element; and
a conductive auxiliary material, **characterised in that** a proportion of a Li element to all the elements included in the cathode mixture is 4 mol% or less.

2. The cathode mixture according to claim 1, wherein a carbon material is included as the conductive auxiliary material.

3. The cathode mixture according to claim 1 or 2, wherein a P element is not included.

4. An all solid state battery comprising a cathode layer, a solid electrolyte layer, and an anode layer in this order; wherein
the cathode layer comprises a cathode active material including elemental sulfur, a sulfur containing compound including an M element, which is Ge, Sn, Si, B or Al, and a S element, and a conductive auxiliary material, **characterised in that** a proportion of a Li element to all the elements included in the cathode layer is 4 mol% or less.

5. A method for producing a cathode mixture, the method comprising steps of:
a preparing step of preparing a raw material mixture containing a cathode active material including elemental sulfur, a sulfide including an M element, which is Ge, Sn, Si, B or Al, and a S element, and a conductive auxiliary material; and
a mechanical milling step of conducting mechanical milling to the raw material mixture, **characterised in that** a proportion of Li element to the raw material mixture is 4 mol% or less.

## Patentansprüche

1. Kathodenmischung, umfassend
ein Kathodenaktivmaterial, das einen elementaren Schwefel enthält,
eine schwefelhaltige Verbindung, die ein M-Element, bei dem es sich um Ge, Sn, Si, B oder Al handelt, und ein S-Element enthält, und
ein leitfähiges Hilfsmaterial, **dadurch gekennzeichnet, dass** ein Anteil eines Li-Elements zu allen in der Kathodenmischung enthaltenen Elementen 4 Mol-% oder weniger beträgt.

2. Kathodenmischung nach Anspruch 1, wobei ein Kohlenstoffmaterial als das leitfähige Hilfsmaterial enthalten ist.

3. Kathodenmischung nach Anspruch 1 oder 2, wobei ein P-Element nicht enthalten ist.

4. Festkörperbatterie mit einer Kathodenschicht, einer Festelektrolytschicht und einer Anodenschicht in dieser Reihenfolge, wobei
die Kathodenschicht ein Kathodenaktivmaterial umfasst, das elementaren Schwefel, eine schwefelhaltige Verbindung, die ein M-Element, bei dem es sich um Ge, Sn, Si, B oder Al handelt, und ein S-Element enthält, und ein leitfähiges Hilfsmaterial umfasst, **dadurch gekennzeichnet, dass** ein Anteil eines Li-Elements zu allen in der Kathodenschicht enthaltenen Elementen 4 Mol-% oder weniger beträgt.

5. Verfahren zur Herstellung einer Kathodenmischung, wobei das Verfahren die folgenden Schritte umfasst:
einen Herstellungsschritt, bei dem eine Rohmaterialmischung hergestellt wird, die ein Kathodenaktivmaterial enthält, das elementaren Schwefel, ein Sulfid, das ein M-Element, bei dem es sich um Ge, Sn, Si, B oder Al handelt, und ein S-Element enthält, und ein leitfähiges Hilfsmaterial enthält, und
einen Schritt des mechanischen Mahlens, bei dem die Rohmaterialmischung mechanisch gemahlen wird, **dadurch gekennzeichnet, dass** ein Anteil von Li-Element an der Rohmaterialmischung 4 Mol-% oder weniger beträgt.

## Revendications

1. Mélange de cathode comprenant :
un matériau actif de cathode incluant un soufre élémentaire ;
un soufre contenant un composé incluant un élément M, qui est Ge, Sn, Si, B ou Al, et un élément S ; et
un matériau auxiliaire conducteur, **caractérisé en ce qu'**une proportion d'un élément Li par rapport à tous les éléments inclus dans le mélange de cathode est de 4 % en mole ou moins.

2. Mélange de cathode selon la revendication 1, dans lequel un matériau de carbone est inclus en tant que le matériau auxiliaire conducteur.

3. Mélange de cathode selon la revendication 1 ou 2, dans lequel un élément P n'est pas inclus.

4. Batterie entièrement à l'état solide comprenant une couche de cathode, une couche d'électrolyte solide, et une couche d'anode dans cet ordre ; dans laquelle
la couche de cathode comprend un matériau actif de cathode incluant un soufre élémentaire, un soufre contenant un composé incluant un élément M, qui est Ge, Sn, Si, B ou Al, et un élément S, et un matériau auxiliaire conducteur, **caractérisé en ce qu'**une proportion d'un élément Li par rapport à tous les éléments inclus dans la couche de cathode est de 4 % en mole ou moins.

5. Procédé de production d'un mélange de cathode, le procédé comprenant les étapes de :
une étape de préparation consistant à préparer un mélange de matière première contenant un matériau actif de cathode incluant un soufre élémentaire, un sulfure incluant un élément M, qui est Ge, Sn, Si, B ou Al, et un élément S, et un matériau auxiliaire conducteur ; et
une étape de broyage mécanique consistant à effectuer un broyage mécanique du mélange de matière première, **caractérisé en ce qu'**une proportion d'un élément Li par rapport au mélange de matière première est de 4 % en mole ou moins.
